# EUROPÄISCHE PATENTSCHRIFT

(11) **EP 1 248 931 B1**
(45) Veröffentlichungstag und Bekanntmachung des Hinweises auf die Patenterteilung: **24.11.2004**
(21) Anmeldenummer: 01909446.5
(22) Anmeldetag: 11.01.2001
(51) Int. Cl.: F24H 1/40

(54) **RÖHREN-ERHITZEROFEN**
TUBULAR OVEN
FOUR DE CHAUFFE PAR TUYAUX

(30) Priorität: 14.01.2000 DE 10001293
(43) Veröffentlichungstag der Anmeldung: 16.10.2002
(73) Patentinhaber: WS-Wärmeprozesstechnik GmbH, 71272 Renningen (DE)
(72) Erfinder: WÜNNING, Joachim, G., 71229 Leonberg (DE)
(74) Vertreter: Rüger, Barthelt & Abel Patentanwälte
(86) Internationale Anmeldenummer: PCT/DE2001/000076
(87) Internationale Veröffentlichungsnummer: WO 2001/051867

(56) Entgegenhaltungen:
- EP-A- 0 079 980
- GB-A- 665 865
- GB-A- 988 275
- GB-A- 1 037 094
- US-A- 2 660 996
- US-A- 2 752 897

## Beschreibung

Die Erfindung betrifft ein Beheizungssystem, insbesondere eine Thermoprozessanlage, in der ein Produktstrom in Rohren indirekt erhitzt wird.

In Thermoprozessanlagen werden Fluide, die häufig unter Druck stehen, indirekt erhitzt, wobei die Wärmeenergie für eine Erwärmung, eine Phasenumwandlung, als Reaktionswärme (endotherme Reaktion) oder für mehrere dieser Effekte genutzt wird. Die Fluide werden in Erhitzerrohren geführt, die meist bis an ihre thermische Grenze belastet werden. Dabei dürfen keine lokalen Überhitzungen auftreten.

Aus der EP-A-0079980 ist ein Warmwasser-, Heißwasser- oder Dampfkessel mit Gas- oder Ölfeuerung bekannt. Der Kessel wird durch einen Feuerraum gebildet, der kegelstumpfförmig ausgebildet ist. An seinem kleinerem Ende ist ein Brenner angeordnet, der eine Flamme axial in den Feuerraum eintreten lässt. Die Flamme ist von Rohren umgeben, die als zu der Brennermittelachse konzentrische Ringe ausgebildet sind. Ein zweiter Satz Ringrohre mit größerem Durchmesser ist konzentrisch zu dem ersten Satz Ringrohre angeordnet, so dass im Längsschnitt eine Zickzackanordnung entsteht. Diese ist jedoch parallel zur Brennerlängsachse ausgerichtet.

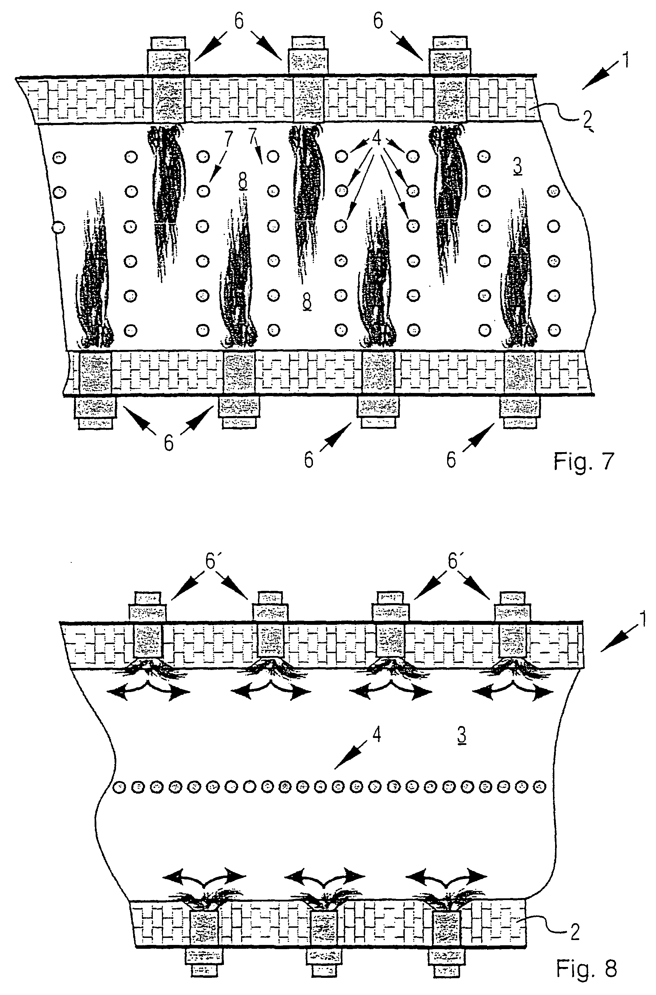

In den Figuren 7 und 8 sind aus der Praxis bekannte Thermoprozessanlagen 1 veranschaulicht. Die Thermoprozessanlagen 1 weisen jeweils einen von einer z.B. gemauerten Ofenwand 2 umschlossenen Innenraum auf, in dem Erhitzerrohre 4 angeordnet sind. Zur Beheizung derselben sind in Durchbrüchen der Ofenwand 2 Brenner 6 angeordnet. Bei der Ausführungsform nach Figur 7 sind die Erhitzerrohre 4 jeweils vertikal und nebeneinander in Reihen angeordnet, so dass paarweise zwischen Rohrreihen 7 jeweils eine Gasse 8 ausgebildet ist. Die Brenner 6 erteilen dem Brennstoff und der Luft einen axialen Austrittsimpuls und feuern in die Gassen 8, wobei die Wärme vor allem durch Flammen- und Gasstrahlung auf die Erhitzerrohre 4 übertragen wird. Von der Ofenwand 2 herrührende Strahlung trifft die Erhitzerrohre 4 ungleichmäßig.

Es ergibt sich eine relativ geringe Wärmeübertragungsleistung. Außerdem ist diese Anordnung nicht für den Einsatz von Brennern mit flammenloser Oxidation eingerichtet, die relativ große Bereiche reduzierender Atmosphäre ausbilden, die schädlich für die Erhitzerrohre 4 ist.

Bei der Thermoprozessanlage 1 nach Figur 8 sind die Erhitzerrohre 4 in einer Reihe etwa in der Mitte des Innenraums 3 angeordnet. In Durchbrüchen der Ofenwand 2 sind Drallbrenner 6' vorgesehen, die dem Brennstoff und der zugeführten Verbrennungsluft einen im wesentlichen radialen Austrittsimpuls erteilen. Die Flamme und erhitzte Bereiche der Ofenwand 2 erzeugen einen heißen Fleck, der den überwiegenden Teil der Energie aus der Flamme durch Strahlung auf die Erhitzerrohre 4 überträgt. Die Zonen hoher Strahlungsintensität sind klein, und aus diesem Grund muß eine Vielzahl von Drallbrennern 6' installiert werden.

Davon ausgehend ist es Aufgabe der Erfindung, eine Anordnung zu schaffen, mit der eine gleichmäßige Rohrerwärmung unter Vermeidung von Rohrüberhitzungen möglich wird. Dabei soll eine möglichst kompakte Anordnung erzielt werden.

Durch die erfindungsgemäße Anordnung von Brennern und Erhitzerrohren erzeugen die Brenner auf der gegenüberliegenden Wand eine große Zone erhöhter Temperatur, die ohne Schattenbildung im Strahlungsaustausch mit den Erhitzerrohren steht. Die Energie wird durch Festkörperstrahlung (Wand - Rohr), Gasstrahlung (Reaktionszone - Rohr) und Konvektion (vollständig reagierte Verbrennungsprodukte - Rohr) gleichmäßig übertragen.

Die Brenner erteilen dem austretenden Brennstoff-Luftstrahl vorzugsweise einen großen axialen Austrittsimpuls. Dieser ist vorzugsweise so groß, dass der Strahl die gegenüberliegende Wand erreicht und dort einen heißen Fleck/Bereich erzeugt. Die Brenner können Brennstoff-Luft-Gemisch-Austrittsöffnungen oder getrennte Austrittsöffnungen für Brennstoff und Luft aufweisen. Dieser gibt Wärmestrahlung an die Erhitzerrohre ab.

Werden Brenner eingesetzt, die nach dem Prinzip der flammenlosen Oxidation arbeiten, bilden sich in Brennernähe keine Temperaturspitzen aus, so dass im Winkel gegenüberstehende Rohrreihenabschnitte vor dem Brenner relativ nahe zusammengeführt werden können. Die großräumige Rezirkulation der Verbrennungsgase ermöglicht insbesondere bei der flammenlosen Oxidation eine optimale Absenkung der NOₓ-Emission auch bei höchster Luftvorwärmung. Relativ große, sich ausbildende, reduzierende Bereiche kommen aufgrund der Rohranordnung nicht mit den Erhitzerrohren in Berührung. Die Rohranordnung ermöglicht außerdem eine kompakte Anlagenbauweise und hohe Wärmeübertragungsleistungen ohne Temperaturspitzen an den Erhitzerrohren.

Darüber hinaus gestatten zur flammenlosen Oxidation geeignete Brenner auch die Verwendung von problematischen Brennstoffen oder von Brennstoffen wechselnder Zusammensetzung, die gewöhnlich Stabilitätsprobleme bei der Ausbildung einer Flamme mit sich bringen würden.

Weitere Einzelheiten vorteilhafter Ausführungsformen der Erfindung sind Gegenstand der Zeichnung, der Beschreibung oder Unteransprüchen.

In der Zeichnung sind Ausführungsbeispiele der Erfindung veranschaulicht. Es zeigen:
Figur 1 eine Thermoprozessanlage mit erfindungsgemäßer Brenner- und Erhitzerrohranordnung in einer schematisierten Horizontalschnittdarstellung.
Figur 2 eine abgewandelte Ausführungsform der Thermoprozessanlage in Horizontalschnittdarstellung.
Figur 3 die Thermoprozessanlage nach Figur 1 oder nach Figur 2 in einer schematisierten Perspektivdarstellung.
Figur 4 eine abgewandelte Ausführungsform der Thermoprozessanlage,
Figur 5 eine weitere abgewandelte Ausführungsform der Thermoprozessanlage, und
Figur 6 einen Brenner der Thermoprozessanlage in einer schematisierten Schnittdarstellung als Prinzipdarstellung.
Darüber hinaus zeigen die Figuren 7 und 8 Thermoprozessanlagen nach dem Stand der Technik.

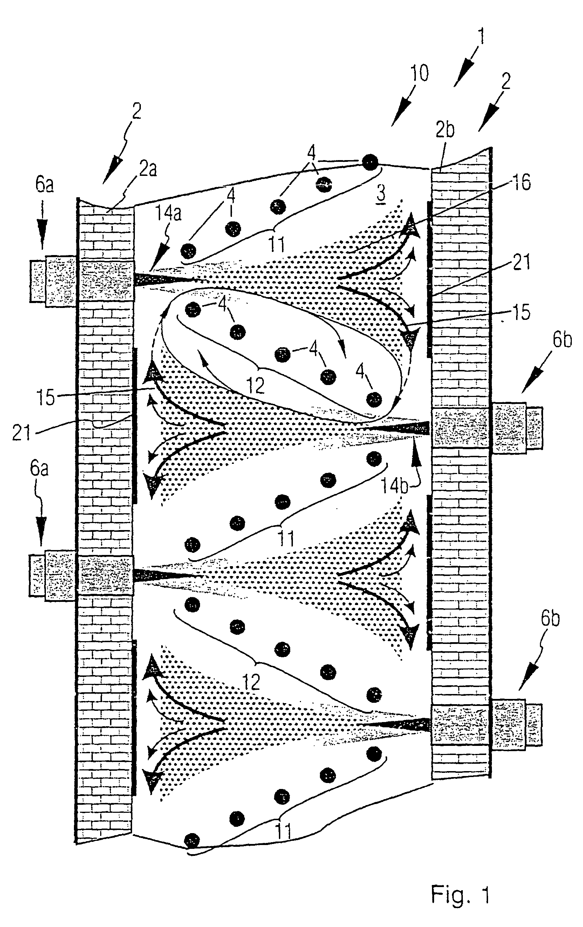

In Figur 1 ist eine Thermoprozessanlage 1 mit einer gemauerten Ofenwand 2 (2a, 2b) veranschaulicht, die einen Ofenraum 3 abgrenzt und eine Wandanordnung bildet. In dem Ofenraum 3 sind Erhitzerrohre 4 angeordnet, in denen ein zu erhitzendes oder auf hoher Temperatur zu haltendes Fluid strömt. Das Fluid kann dabei auf seinem Weg durch die Erhitzerrohre 4 chemischen Umwandlungen unterliegen.

Die Erhitzerrohre 4 sind, wie Figur 1 veranschaulicht, achsparallel und in Abständen zueinander in einer zick-zackförmigen Reihe 10 angeordnet. Dabei bilden jeweils Gruppen 11, 12 von Erhitzerrohren 4 Rohrreihenabschnitte, die zueinander nicht parallel ausgerichtet sind und einen von Null verschiedenen vorzugsweise spitzen Winkel (z.B. 30°...80°) miteinander einschließen. Die von den Reihenabschnitten 11, 12 gebildeten Winkel öffnen sich abwechselnd zu der einen und der anderen der beiden einander gegenüberliegenden Ofenwände 2a, 2b. Bei dem Ausführungsbeispiel nach Figur 1 sind die von den Gruppen 11, 12 gebildeten Abschnitte der Reihe für sich jeweils gerade, wobei die Abschnitte der Gruppen 11 zueinander parallel sind. Auch die Reihenabschnitte der Gruppen 12 sind in diesem Beispiel gerade und zueinander parallel. Es ist jedoch auch möglich, die Erhitzerrohre 4 so anzuordnen, dass die Reihenabschnitte der Gruppen 11 und 12 jeweils gebogen oder geschwungen sind.

Zur Beheizung der Erhitzerrohre 4 sind Brenner 6a, 6b vorgesehen, die in entsprechenden Öffnungen der Ofenwand 2a bzw. 2b positioniert sind. Die Brenner 6a, 6b sind bei der Ausführungsform nach Figur 1 Brenner, die zur flammenlosen Oxidation eingerichtet sind. Sie erzeugen einen Brennstoff-Luft-Stahl, d.h einem Mengenstrom 14a, 14b mit axialem Austrittsimpuls, der gegen die jeweils gegenüberliegende Ofenwand 2b, 2a gerichtet ist. An dem Brenneraustritt wird durch entsprechende strömungstechnische Ausbildung die Stabilisierung einer Flamme vermieden.

Der von dem Brenner 6a, 6b ausgehende Mengenstrom 14a, 14b findet jeweils zwischen zwei einander benachbarten Erhitzerrohren 4 durch, von denen eines zu der Gruppe 11 und das andere zu der Gruppe 12 gehört. Es bildet sich dann eine großräumige, in Figur 1 durch Pfeile 15 veranschaulichte Rezirkulationsströmung aus, wobei zwischen den Reihenabschnitten der Gruppen 11, 12 eine großräumige Reaktionszone 16 entsteht.

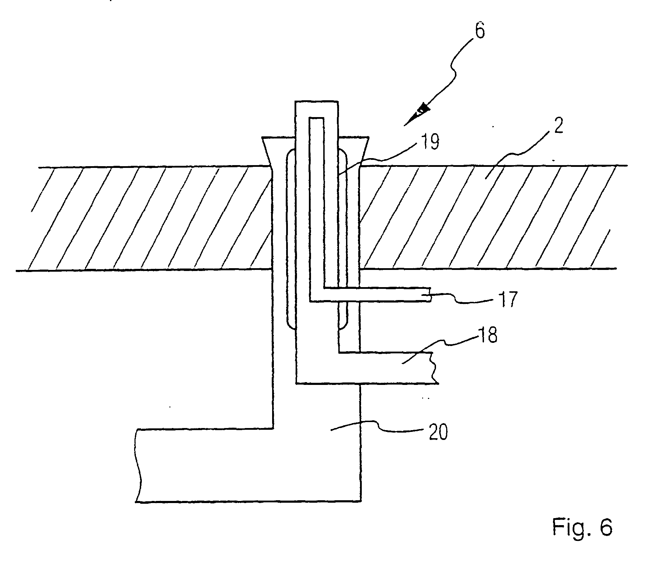

Die Brenner 6a, 6b sind als Rekuperatorbrenner oder Regeneratorbrenner ausgeführt, die eine hohe Luftvorwärmung gestatten. Beispielhaft ist in Figur 6 ist eine Prinzipskizze eines Rekuperatorbrenners 6 angegeben. Dieser weist eine zentrale Brennstoffzufuhrleitung 17 auf, die Brennstoff mit axialem Austrittsimpuls austreten läßt. Außerdem weist der Brenner 6 eine Luftzuführung 18 auf, die der austretenden Verbrennungsluft ebenfalls einen axialen Austrittsimpuls verleiht. Die Luftzuführung 18 steht über ein Rekuperatorrohr 19 mit einem Abgasstrom in Wärmeaustausch, der in Gegenrichtung über eine Abgasleitung 20 aus dem Ofenraum geführt wird. Das Rekuperatorrohr 19 ist ein Wärmetauscher. Durch die Abführung von Abgasen durch die Brenner 6 wird erreicht, dass sich Temperaturregelzonen gegenseitig wenig beeinflussen.

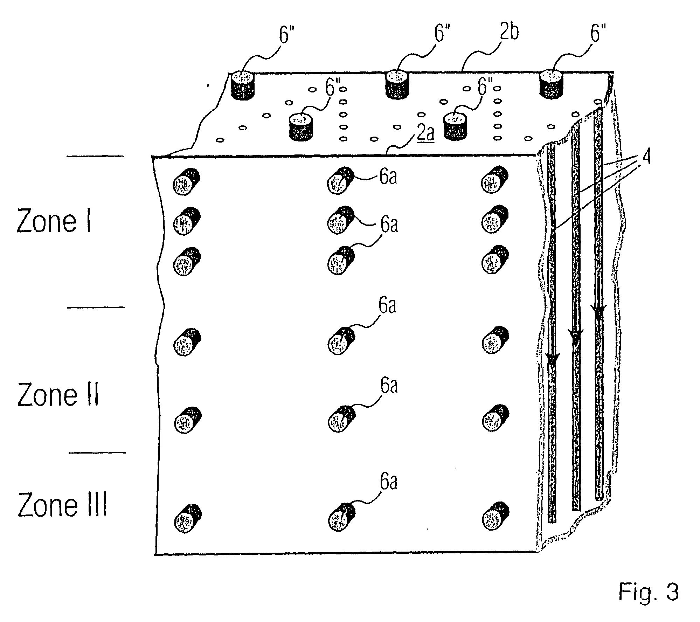

Wie Figur 3 veranschaulicht, können an jeder Ofenwand 2a, 2b jeweils in einer Reihe mehrere Brenner 6 angeordnet sein, wobei die Brenner 6 (6a, 6b) jeweils einen quer zu den Erhitzerrohren 4 gerichteten Austrittsimpuls erzeugen und gruppenweise in Reihen angeordnet sind, die parallel zu den Erhitzerrohren 4 gerichtet sind. Die Brenner 6a können in gleichmäßigen Abständen oder in unterschiedlichen Abständen angeordnet sein. Beispielsweise kann bei abwärtsgerichtetem Fluidstrom in einer ersten Zone eine höhere Brennerzahl (Brennerdichte) vorhanden sein, um den eintretenden Fluidstrom zunächst schnell zu erwärmen, wobei in darunterliegenden Zonen 2, 3 entsprechend weniger Brenner 6 ausreichend sind, um die erreichte Temperatur zu halten.

Es können zusätzliche Brenner 6" vorgesehen sein, die parallel zu den Erhitzerrohren 4 gerichtet sind und somit einen parallel zu diesen Erhitzerrohren 4 gerichteten Austrittsimpuls haben. Diese Brenner sind vorzugsweise im Zick-Zack oberhalb bzw. unterhalb der etwa dreieckigen von den Gruppen 11, 12 (Figur 1) begrenzten Bereichen 16 des Ofenraums 3 angeordnet. Sie können zum Starten der Anlage, d. h. zu einer ersten Aufheizung dienen, indem sie parallel zu den Erhitzerrohren 4 feuern und später abgeschaltet, auf flammenlose Oxidation umgeschaltet oder weiterbetrieben werden. Bei einer bevorzugten Ausführungsform sind die Brenner 6" mit Flammenhaltern ausgerüstete Brenner, die eine Flamme erzeugen, während die Brenner 6a, 6b Brenner ohne Flammenhalter sind, die zur flammenlosen Oxidation eingerichtet sind und z.B. erst im aufgeheizten Zustand zugeschaltet werden. Bedarfsweise können die Brenner 6a, 6b jedoch auch umschaltbare Brenner sein, die zum Zünden zunächst mit Flamme arbeiten und, wenn die erforderliche Temperatur erreicht ist, auf flammenlosen Betrieb umschalten.

Die insoweit beschriebene Thermoprozessanlage 1 arbeitet wie folgt:

In Betrieb geben die Brenner 6a, 6b quer zu den Erhitzerrohren 4 und etwa rechtwinklig zu der Ofenwand 6a, 6b einen Brennstoff-Luft-Strahl ab, der jeweils auf die gegenüberliegende Ofenwand 2b, 2a gerichtet ist. Der Strahl tritt zwischen benachbarten Erhitzerrohren 4 durch und erreicht die Oxidationszone 16, in der die flammenlose Oxidation stattfindet. Die hier frei werdende Wärme gelangt mit der Gasströmung an die Ofenwand 2b, 2a, an der sich ein entsprechender, stark erwärmter Bereich 21 ausbildet. Die von diesem Bereich 21 ausgehende Wärmestrahlung trifft, wie auch die aus dem Oxidationsbereich 16 ausgehende Wärmestrahlung, die Erhitzerrohre 4 ohne Abschattung. Die Wärmeverteilung ist relativ gleichmäßig, d. h. alle Erhitzerrohre 4 erhalten näherungsweise die gleiche Wärmemenge.

Durch den wechselweise entgegengerichteten Impuls der Brenner 6a, 6b entsteht eine großräumige Zirkulation, wie sie durch die Pfeile 15 angedeutet ist. Die großräumige Rezirkulation schließt jeweils die Erhitzerrohre 4 jeder Gruppe 11, 12 ein, wodurch ein gleichmäßiger, konvektiver Wärmeübergang erreicht wird. Die Erhitzerrohre 4 liegen außerhalb der Oxidationszonen 16, in denen reduzierende Atmosphäre herrscht, was entsprechendem Rohrverschleiß entgegenwirkt.

Die Erhitzerrohre 4 sind bei dem in Figur 1 veranschaulichten Ausführungsbeispiel in zueinander generell gleichen Abständen angeordnet. Über die Anzahl der Erhitzerrohre, deren Abständen und den Winkel, den die Abschnitte der Gruppen 11, 12 miteinander einschließen, läßt sich die Wärmeverteilung auf die Erhitzerrohre 4 gezielt beeinflussen. Durch den Winkel, die Anzahl und den Abstand der Erhitzerrohre kann das Verhältnis von der Fläche der Ofenwand 2 zu der Rohroberfläche bestimmt werden, wobei vorzugsweise näherungsweise Gleichheit zwischen Flächeninhalt der Rohroberfläche und der Ofenwand angestrebt wird.

Die Brenner 6 sind vorzugsweise individuell regelbar sowie zu- und abschaltbar. Auf diese Weise kann die Wärmeverteilung in dem Ofenraum 3 zusätzlich gezielt beeinflusst werden.

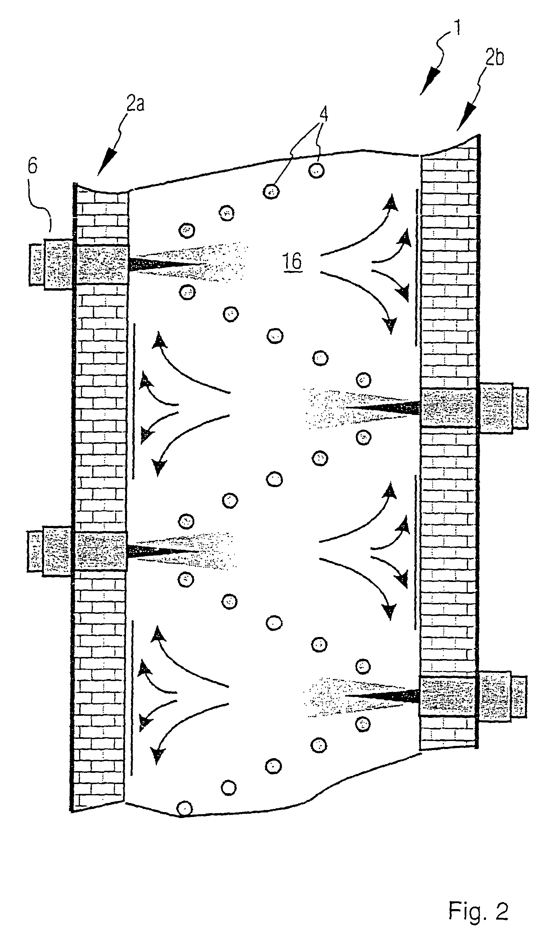

In Figur 2 ist eine abgewandelte Ausführungsform der erfindungsgemäßen Thermoprozessanlage 1 veranschaulicht. Anstelle der zur flammenlosen Oxidation eingerichteten Brenner sind hier Brenner 6 vorgesehen, die eine auf die jeweils gegenüberliegende Ofenwand 2a, 2b gerichtete Flamme erzeugen. Die zickzack-förmige Anordnung der Erhitzerrohre 4 und die großräumigen Strömungsverhältnisse sind jedoch ähnlich wie bei der Ausführungsform nach Figur 1. Ebenso können zusätzliche Brenner 6" vorgesehen sein, wie aus Figur 3 hervorgeht.

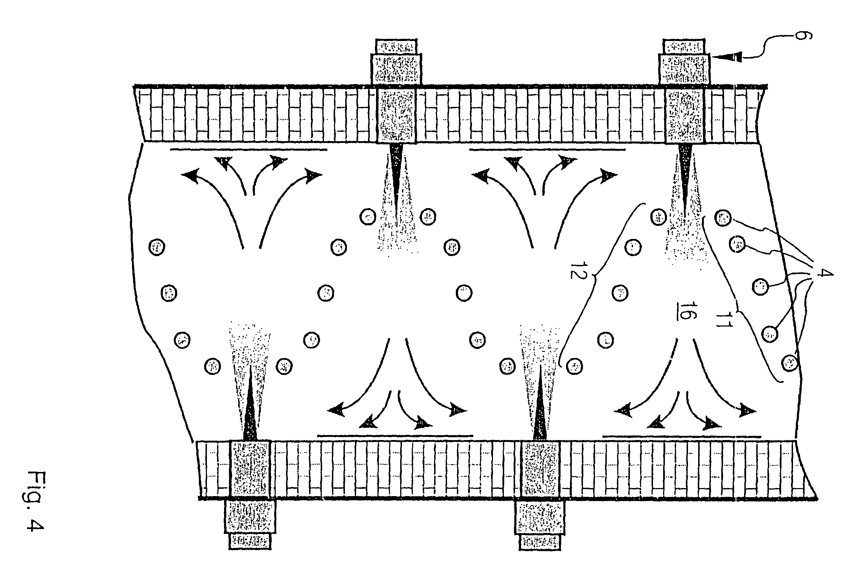

Wie Figur 4 veranschaulicht, ist es darüber hinaus sowohl bei Brennern mit Flamme als auch bei flammenlosen Brennern möglich, die Erhitzerrohre 4 auf einer wellenförmig ausgebildeten Reihe anzuordnen. Auch diese Reihe weist wiederum Abschnitte auf, die von Gruppen 11, 12 von Erhitzerrohren 4 gebildet werden und die zueinander nicht parallel ausgerichtet sind. In Übereinstimmung mit der Ausführungsform nach den Figuren 1 und 2 weisen jedoch die Gruppen 11, 12 vorzugsweise gleich viel Erhitzerrohre 4 auf, wobei die Abstände zwischen den Erhitzerrohren 4 Gruppe 11 und den Erhitzerrohren 4 der Gruppe 12 von dem entsprechenden Brenner 6 ausgehend bis zur gegenüberliegenden Ofenwand zunimmt. Die Abstandszunahme braucht nicht linear zu sein. Ebenso müssen die Abstände zwischen den Erhitzerrohren 4 nicht äquidistant sein.

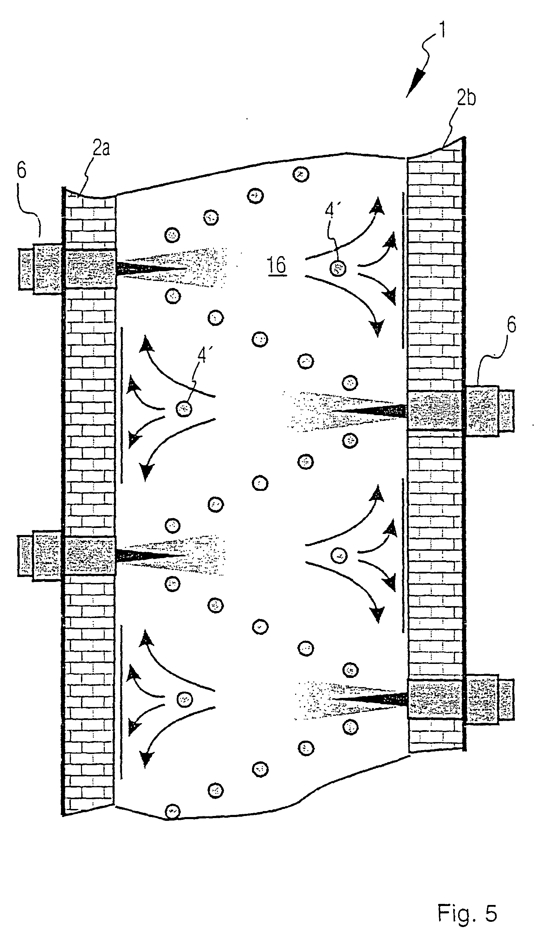

Wie Figur 5 veranschaulicht, können bedarfsweise zusätzliche Erhitzerrohre 4' vorgesehen sein, die bspw. als Überhitzerrohre dienen, einer anderen Prozessstufe zugeordnet sind oder sonst wie grundsätzlich anderen Bedingungen unterliegen sollen wie die Erhitzerrohre 4. Es wird jedoch angestrebt, die zusätzlichen Rohre 4' so anzuordnen, dass sie den beschriebenen Betrieb der Thermoprozessanlage 1 nicht wesentlich beeinflussen.

Eine Thermoprozessanlage 1 weist Erhitzerrohre 4 auf, die in einem Ofenraum in einer wellenförmigen Reihe angeordnet sind. Jeweils an den "Wellenbergen" und in den "Wellentälern" sind Brenner vorgesehen, die einen gegen die gegenüberliegende Ofenwand gerichteten Gasstrahl erzeugen. Strahlungswärme der Ofenwand und der Reaktionszone (Verbrennungswärme) erhitzt die Erhitzerrohre gleichmäßig.

## Patentansprüche

1. Beheizungssystem, insbesondere Thermoprozessanlage (1),
mit einer Wandanordnung (2), die einen beheizbaren Innenraum (3) zumindest teilweise begrenzt,
mit Erhitzerrohren (4) zur Führung eines oder mehrerer zu beheizender Fluide, die in dem Innenraum (3) zueinander im wesentlichen parallel angeordnet sind,
mit Brennern (6), die zur Beheizung des Innenraums (3) quer zu den Erhitzerohren (4) angeordnet und mit ihrem Brennstoff-Luft-Strahl auf einen gegenüberliegenden Abschnitt (21) der Wandanordnung (2) ausgerichtet sind, wobei die Erhitzerrohre (4) in einer Reihe (10) angeordnet sind, die wenigstens zwei Rohrreihenabschnitte (11, 12,) aufweist, die zueinander nicht parallel ausgerichtet sind und die miteinander jeweils einen Winkel einschließen, der sich jeweils von den Brennern (6) weg öffnet.

2. Beheizungssystem nach Anspruch 1, **dadurch gekennzeichnet, dass** die Rohre im Abstand zueinander auf einer zick-zackförmigen, wellenförmigen oder mäanderförmigen Reihe (10) angeordnet sind, die sich zwischen zwei zueinander parallelen Wänden (2a, 2b) der Wandanordnung (2) erstreckt.

3. Beheizungssystem nach Anspruch 1, **dadurch gekennzeichnet, dass** die Brenner so ausgerichtete sind, dass der von dem jeweiligen Brenner (6) ausgehende Gasstrahl zwischen zwei einander benachbarten Erhitzerrohren (4) hindurch in einen im wesentlichen freien Innenraumbereich gerichtet ist.

4. Beheizungssystem nach Anspruch 1, **dadurch gekennzeichnet, dass** jeweils mehrere der Brenner (6) in einer Gruppe (6a) angeordnet sind, in der sie jeweils in einer Reihe angeordnet und parallel zueinander ausgerichtet sind.

5. Beheizungssystem nach Anspruch 1, **dadurch gekennzeichnet, dass** zusätzliche Brenner (6") im Wesentlichen parallel zu den Erhitzerrohren (4) ausgerichtet sind.

6. Beheizungssystem nach Anspruch 1, **dadurch gekennzeichnet, dass** die Brenner (6) mit einer Einrichtung zur Luftvorwärmung versehen sind.

7. Beheizungssystem nach Anspruch 1, **dadurch gekennzeichnet, dass** die Brenner (6) zur Ausbildung von Verhältnissen eingerichtet sind, bei denen flammenlose Oxidation des in den Innenraum (3) eingeleiteten Brennstoffs auftritt.

8. Beheizungssystem nach Anspruch 1, **dadurch gekennzeichnet, dass** die Brenner dem in den Innenraum (3) geleiteten Brennstoff und der Verbrennungsluft einen vorwiegend axialen Austrittsimpuls mit geringem oder ohne Drall erteilen.

## Claims

1. Heating system, in particular thermal processing plant (1),
with a wall arrangement (2), which at least partially borders a heatable interior (3),
with heater tubes (4) for conducting one or more fluids to be heated arranged essentially parallel to one another in the interior (3),
with burners (6), which are arranged transversely to the heater tubes (4) for heating the interior (3) and are oriented with their fuel-air jet onto an opposing section (21) of the wall arrangement (2), wherein the heater tubes (4) are arranged in a row (10), which has at least two tube row sections (11, 12), which are not oriented parallel to one another and which together respectively enclose an angle, which opens respectively away from the burners (6).

2. Heating system according to Claim 1, **characterised in that** the tubes are spaced from one another in a zigzag-shaped, wave-shaped or meander-shaped row (10), which extends between two parallel walls (2a, 2b) of the wall arrangement (2).

3. Heating system according to Claim 1, **characterised in that** the burners are oriented so that the gas jet issuing from the respective burner (6) is directed between two adjacent heater tubes (4) and into an essentially free interior area.

4. Heating system according to Claim 1, **characterised in that** several of the burners (6) are respectively arranged in a group (6a), in which they are respectively arranged in a row and oriented parallel to one another.

5. Heating system according to Claim 1, **characterised in that** additional burners (6") are oriented essentially parallel to the heater tubes (4).

6. Heating system according to Claim 1, **characterised in that** the burners (6) are provided with a means for preheating air.

7. Heating system according to Claim 1, **characterised in that** the burners (6) are arranged for the generation of conditions, in which flameless oxidation of the fuel introduced into the interior (3) occurs.

8. Heating system according to Claim 1, **characterised in that** the burners provide the fuel directed into the interior (3) and the combustion air with a predominantly axial exit pulse with low or no momentum.

## Revendications

1. Système de chauffage, plus particulièrement installation de traitement thermique,
avec un agencement de parois (2) qui délimite au moins partiellement une chambre intérieure (3) chauffable,
avec des tubes de réchauffeur (4) pour la circulation d'un ou de plusieurs fluide à chauffer, qui sont disposés essentiellement parallèlement les uns aux autres dans la chambre intérieure (3),
avec des brûleurs (6) qui, pour le chauffage de la chambre intérieure (3), sont disposés transversalement aux tubes de réchauffeur (4) et dont le jet de combustible-air est orienté en direction d'une portion (21) située en vis-à-vis de l'agencement de parois (2), les tubes de réchauffeur (4) étant disposés en une ligne (10) qui comporte au moins deux segments de ligne de tubes (11, 12) non parallèles entre eux, qui définissent un angle un angle dont l'ouverture est orinetée dans la direction opposée aux brûleurs.

2. Système de chauffage selon la revendication 1, **caractérisé par le fait que** les tubes sont disposés à distance les uns des autres sur une ligne (10) formant des zig-zag, des ondes ou des méandres, qui s'étend entre deux parois (2a, 2b) mutuellement parallèles de l'agencement de parois (2).

3. Système de chauffage selon la revendication 1, **caractérisé par le fait que** les brûleurs sont orientés de telle sorte que le jet de gaz sortant du brûleur (6) concerné soit dirigé entre deux tubes de réchauffeur (4) mutuellement voisins, dans une zone essentiellement dégagée de la chambre intérieure.

4. Système de chauffage selon la revendication 1, **caractérisé par le fait que** chaque fois plusieurs brûleurs (6) sont agencés en un groupe (6a) à l'intérieur duquel ils sont disposés chaque fois en une ligne et sont orientés parallèlement les uns aux autres.

5. Système de chauffage selon la revendication 1, **caractérisé par le fait que** des brûleurs (6") supplémentaires sont orientés essentiellement parallèlement aux tubes de réchauffeur (4).

6. Système de chauffage selon la revendication 1, **caractérisé par le fait que** les brûleurs (6) sont équipés d'un dispositif de préchauffage d'air.

7. Système de chauffage selon la revendication 1, **caractérisé par le fait que** les brûleurs (6) sont agencés pour créer des conditions, dans lesquelles il se produit une oxydation sans flammes du combustible introduit dans la chambre intérieure (3).

8. Système de chauffage selon la revendication 1, **caractérisé par le fait que** les brûleurs (6) donnent au combustible et à l'air de combustion introduits dans la chambre intérieure une impulsion de sortie essentiellement axiale avec une légère rotation ou sans rotation.
